# EUROPEAN PATENT APPLICATION

(11) **EP 2 452 974 A1**
(43) Date of publication of application: **16.05.2012**
(21) Application number: 10797065.9
(22) Date of filing: 30.06.2010
(51) Int. Cl.: C08L 23/08, C08J 5/18, C08L 23/10

(54) **POLYMERIC COMPOSITION, METHOD FOR PRODUCING NON-STRETCHED FILM, NON-STRETCHED FILM, HEAT-SEALING MATERIAL, AND PACKAGING MATERIAL**

(30) Priority: 09.07.2009 JP 2009162844; 05.08.2009 JP 2009182626
(71) Applicant: Du Pont-Mitsui Polychemicals Co., Ltd., Tokyo 105-7117 (JP)
(72) Inventor: NAKANO, Shigenori, Ichihara-shi Chiba 299-0108 (JP); SUZUKI, Kaoru, Ichihara-shi Chiba 299-0265 (JP); TOYODA, Toshihisa, Tokyo 105-7117 (JP)
(74) Representative: Gulde Hengelhaupt Ziebig & Schneider
(86) International application number: PCT/JP2010/061209
(87) International publication number: WO 2011/004754

(57) **Abstract**

Provided is a polymer composition that contains an ionomer which includes an ethylene-α,β-unsaturated carboxylic acid copolymer and a ternary polymer of ethylene-α,β-unsaturated carboxylic acid-α,β-unsaturated carboxylic acid ester, and a propylene-based polymer, wherein a melt flow rate (MFR) value (under a load of 2160 g) of the ionomer at a process temperature in forming a film by T-die melting casting method is from 50% to 250% based on an MFR value of the propylene-based polymer under the same condition.

## Description

### TECHNICAL FIELD

The present invention relates to a polymer composition, a method for producing a non-stretched film, a non-stretched film, a heat seal material, and a packing material.

### BACKGROUND ART

Hitherto, a tube-like or a flat film-like packing material has been sealed by heat sealing (lock sealing) so as to store and protect the contents contained therein. Regarding the improvement of the seal strength of the lock sealing, various investigations have been carried out into aspects such as the packing material, the packing machine, or the packing conditions. As a polymer material used for the packing material, an ethylene-based polymer such as polyethylene, and an ethylene-vinyl acetate copolymer are known. Among these materials, an ionomer is widely used since the ionomer is excellent in terms of a hot sealing property, a low-temperature sealing property, oil resistance, and the like.

In addition, a packing technique for heat sealing (peelable sealing) has been developed which makes it possible to contain contents with a strong sealing property to a certain degree, and to easily open the packing material by peeling the sealed portion when it is desired to take the contents out of the packing material.

For example, there is a disclosure about a polymer material that includes 80% to 93% by weight of an ethylene/acidic ionomer and 7% to 20% by weight of a propylene/α-olefin copolymer (see, for example, Japanese Examined Patent Application Publication (JP-B) No. 1-49382). The lock sealing and the peelable sealing can be performed on a packing material that uses the polymer material depending on the temperature. When a film or a laminate is formed using the polymer material and filled and packed by a packing machine, a portion sealed under a high temperature condition becomes a lock seal portion, and a portion sealed under a low temperature condition becomes a peelable seal portion. That is, it is possible to perform packing in which the lock seal portion and the peelable seal portion are created concurrently, by using a single packing material.

As the packing material in which both the lock sealing and the peelable sealing can be performed, a layered packing material is known which is obtained by layering a substrate layer such as a polyester layer and an ionomer layer through an adhesive layer. The layered packing material is required to show a seal strength of about 4 N/10 mm when having been sealed at a low temperature (at about 100 °C to 130 °C, for example), and to show a seal strength of 10 N/10 mm or more when having been sealed at a high temperature (at 150 °C or higher, for example).

In practice, in order to stably perform the lock sealing and the peelable sealing, a packing material is required to have a temperature region in which the peelable sealing can be satisfactorily performed. That is, the packing material is required to have a region in which the seal strength does not change drastically depending on the temperature at relatively low temperatures.

As a technique that relates to such a sealing technique, there is a disclosure about a laminate film for packing that uses a polymer composition which includes 60 to 95 parts by weight of a metal salt of an ethylene-α,β-unsaturated carboxylic acid-based copolymer and 40 to 5 parts by weight of an ethylene-α,β-unsaturated carboxylic acid ester copolymer (see, for example, JP-B No. 5-11549). The disclosure mentions that the laminate film for packing can obtain a relatively low and constant seal strength in a wide low temperature region and shows a high seal strength under a high temperature sealing condition.
In addition, there is a disclosure about a material that is obtained by mixing an ionomer which contains 5% to 25% by weight of a unit derived from isobutyl acrylate as well as a unit derived from ethylene and an acid with a propylene copolymer (see, for example, JP-B No. 1-493 82).

However, the peelable seal strength of the film formed using those materials is not necessarily sufficient for responding to the handleability during storage and carriage and to the variety of contents. It is desired to develop a material that improves the seal strength of the peelable sealing, can realize the peelable sealing in a wide low temperature region, and has a high seal strength in a high temperature region.

Particularly, in a film formed by T-die melting casting method (process temperature: about 200 °C to 250 °C) (hereinafter, simply referred to as "T-die casting method"), a technique of concurrently applying a lock sealing property and a peelable sealing property to the film has not been established, compared to a film formed by inflation method (process temperature: about 170 °C to 180 °C).
For example, Example 30 of JP-B No. 1-49382 discloses a stretched sheet that is produced by being biaxially stretched after the T-die casting for three layer-coextrusion in which a seal layer is 50 µm and in which a total thickness is 510 µm. However, the peelable seal strength and the lock seal strength of the sheet are 3.7 N/15 mm and 5.7 N/15 mm respectively, so there is almost no difference between both the seal strengths. The lock seal strength required commercially varies depending on the purposes, and the lock seal strength is 10 N/15 mm or more in some cases, also, the lock seal strength is 15 N/ 15 mm or more in some cases. However, the lock seal strength of the above example is a long way from the strengths that are commercially required, hence the lock seal strength of the example lacks practicality. That is, with the polymer composition disclosed in the example of JP-B No.1-49382, the film formed by the T-die casting method cannot accomplish a sufficient dual-sealing performance (lock sealing and peelable sealing).

The film provided by the T-die casting method has advantageous characteristics such as uniform thickness, excellent smoothness, transparency, and glossiness, and great productivity resulting from non-stretching. Consequently, it is desired to produce a polymer composition that is suitable for forming a film by the T-die casting method and can accomplish the excellent dual-sealing performance.

### DISCLOSURE OF INVENTION

### PROBLEM TO BE SOLVED BY THE INVENTION

An object of the invention is to provide a polymer composition for producing film that shows a high seal strength under a high temperature sealing condition and shows an appropriate seal strength throughout a wide temperature range under a low temperature sealing condition, and is suitable for forming a film by T-die casting method. Another object of the invention is to provide a method for producing a non-stretched film that uses the polymer composition and a non-stretched film that is produced using the polymer composition.
In addition, the other object of the invention is to provide a heat seal material and a packing material that use the polymer composition.

### MEANS FOR SOLVING THE PROBLEM

The present invention is a polymer composition that contains an ionomer and a propylene-based polymer, wherein the ionomer includes an ethylene-α,β-unsaturated carboxylic acid copolymer and a ternary polymer of ethylene-α,β-unsaturated carboxylic acid-α,β-unsaturated carboxylic acid ester, and a ratio between a melt flow rate (MFR) of the ionomer and the MFR of the propylene-based polymer at a film formation temperature is in a predetermined range. A film formed by T-die casting method by using the polymer composition shows a high seal strength under a high temperature sealing condition (for example, 25 N/15 mm or more at 180 °C). In addition, under a low temperature sealing condition, the film shows a significantly lower seal strength (for example, a difference of 20 N/15 mm or more) throughout a wide temperature range (for example, a range from about 100 °C to 150 °C) compared to the high temperature sealing condition, and an appropriate seal strength (for example, 2 N/15 mm to 10 N/15 mm).

Specific means for accomplishing the above objects is as follows.
<1> A polymer composition that includes an ionomer which includes an ethylene-α,β-unsaturated carboxylic acid copolymer and a ternary polymer of an ethylene-α,β-unsaturated carboxylic acid-α,β-unsaturated carboxylic acid ester, and a propylene-based polymer, wherein a melt flow rate (MFR) value (under a load of 2160 g) of the ionomer at a process temperature in forming a film by a T-die melting casting method is from 50% to 250% based on an MFR value of the propylene-based polymer under the same condition.
<2> The polymer composition as described in <1>, wherein a content of a constituent unit derived from the α,β-unsaturated carboxylic acid ester in the ternary polymer is from 1% to 10% by mass based on a total mass of the ionomer.
<3> The polymer composition as described in <1> or <2>, wherein a content of the ionomer is from 85 to 95 parts by mass, and a content of the propylene-based polymer is from 5 to 15 parts by mass, based on 100 parts by mass of a total amount of the ionomer and the propylene-based polymer.
<4> The polymer composition as described in any one of <1> to <3>, wherein a degree of neutralization of an acid group in the ionomer is from 10% to 60%.
<5> The polymer composition as described in any one of <1> to <4>, wherein the α,β-unsaturated carboxylic acid ester included in the ternary polymer as a polymerization component is selected from a lower alkyl ester of α,β-unsaturated carboxylic acid, wherein a number of carbon atoms in the alkyl is from 1 to 5.
<6> The polymer composition as described in any one of <1> to <5>, wherein the α,β-unsaturated carboxylic acid included in the copolymer and the ternary polymer as a polymerization component is selected from acrylic acid and methacrylic acid, and the α,β-unsaturated carboxylic acid ester included in the ternary polymer as a polymerization component is selected from a lower alkyl ester of acrylic acid, wherein a number of carbon atoms in the alkyl is from 1 to 5, or a lower alkyl ester of methacrylic acid, wherein a number of carbon atoms in the alkyl is from 1 to 5.
<7> The polymer composition as described in <6>, wherein the α,β-unsaturated carboxylic acid ester is a 4 carbon atom-alkyl ester of acrylic acid.
<8> The polymer composition as described in <6>, wherein the α,β-unsaturated carboxylic acid ester is an isobutyl acrylate.
<9> The polymer composition as described in any one of <1> to <8>, wherein the ionomer is a Zn ionomer that includes an ethylene-(meth)acrylic acid copolymer and a ternary polymer of ethylene-(meth)acrylic acid- (meth)acrylic acid ester, and the propylene-based polymer is a propylene-ethylene copolymer.
<10> The polymer composition as described in any one of <1> to <9>, wherein a content of a constituent unit derived from the α,β-unsaturated carboxylic acid in the copolymer is from 1% to 30% by mass based on a total mass of the copolymer.
<11> The polymer composition as described in any one of <1> to <10>, wherein a content of a constituent unit derived from the α,β-unsaturated carboxylic acid in the ternary polymer is f rom 1% to 30% by mass based on a total mass of the ternary polymer.
<12> The polymer composition as described in any one of <1> to <11>, wherein a content of a constituent unit derived from the α,β-unsaturated carboxylic acid ester in the ternary copolymer is from 1% to 30% by mass based on a total mass of the ternary polymer.
<13> The polymer composition as described in any one of <1> to <12>, wherein the process temperature is from 200 °C to 250 °C.
<14> A method for producing a non-stretched film with a thickness of 300 µm or less by a T-die melting casting method using the polymer composition as described in any one of <1> to <13>.
<15> The method for producing a non-stretched film as described in <14>, wherein the process temperature in forming a film by the T-die melting casting method is from 200 °C to 250 °C.
<16> A non-stretched film with a thickness of 300 µm or less produced by the method as described in <14> or <15>.
<17> A heat seal material that includes the polymer composition as described in any one of <1> to <13>.
<18> A packing material provided by layering the heat seal material as described in <17> on a substrate.

### EFFECT OF THE INVENTION

According to the present invention, it is possible to provide a polymer composition for producing film that shows a high seal strength under a high temperature sealing condition and shows an appropriate seal strength throughout a wide temperature range under a low temperature sealing condition, and is suitable for forming a film by T-die casting method. In addition, according to the invention, it is possible to provide a method for producing a non-stretched film that uses the polymer composition and a non-stretched film that is produced using the polymer composition. Moreover, according to the invention, it is possible to provide a heat seal material and a packing material that uses the polymer composition.

### BEST MODE FOR CARRYING OUT THE INVENTION

Hereinafter, the polymer composition of the present invention will be described in detail.
In the present specification, a range of a numerical values that is shown using "to" represents a range that includes numerical values disclosed before and after the "to" as a minimum value and a maximum value respectively.

The polymer composition of the invention contains an ionomer that includes (A) an ethylene-α,β-unsaturated carboxylic acid copolymer and a ternary polymer of ethylene-α,β-unsaturated carboxylic acid-α,β-unsaturated carboxylic acid ester, and (B) a propylene-based polymer, in which a melt flow rate (MFR) value of the (A) at a process temperature in forming a film by T-die melting casting method is 50% to 250% based on an MFR value of the (B) under the same condition.

In the film formed by the T-die casting method by using the polymer composition of the invention, the seal strength obtained when sealing is performed at a low temperature improves, and the temperature-dependant change in the seal strength is suppressed to be low throughout a wide temperature region (about 100 °C to 150 °C, for example). Accordingly, it is possible to stably form a peelable seal portion that has a higher seal strength compared to the related art. Moreover, the seal strength obtained when sealing is performed at a high temperature is not greatly impaired.

At the process temperature in forming a film by the T-die casting method, the MFR value of the (A) is 50% to 250% based on the MFR value of the (B), preferably 55% to 200%, and more preferably 80% to 160%. If the MFR value of the (A) is less than 50% based on the MFR value of the (B), a low temperature sealing property is not easily expressed. On the other hand, if the MFR value of the (A) exceeds 250% based on the MFR value of the (B), dual-heat sealing performance (lock sealing and peelable sealing) is not easily expressed. Herein, the MFR is a value measured based on JIS K7210-1999 under a load of 2160 g.

The T-die melting casting method as one of film formation methods is a method of extruding and attaching a molten resin onto a cooling roll that has a smooth surface, and fixing the resin by cooling. The process temperature in the invention refers to a set temperature of the resin in an extruder and a die of a film forming machine. In the T-die casting method, the set temperature is generally about 200 °C to 250 °C. Particularly, when a film is formed by the T-die casting method by using an ethylene-based resin, the temperature of the resin is set targeting on a temperature around 230 °C.

### (A) Ionomer

The polymer composition of the invention contains at least one kind of ionomer that includes an ethylene-α,β-unsaturated carboxylic acid copolymer and a ternary polymer of ethylene-α,β-unsaturated carboxylic acid-α,β-unsaturated carboxylic acid ester (hereinafter, simply referred to as a "ternary polymer"). The ionomer in the invention is obtained by cross-linking at least one or two or more kinds of the ethylene-α,β-unsaturated carboxylic acid copolymer with one or two or more kinds of the ternary copolymer by using metal ions.
If the ionomer in the invention does not include both the ethylene-α,β-unsaturated carboxylic acid copolymer and the ternary copolymer, the seal strength in a low temperature region easily changes depending on the temperature and makes it difficult to stably form the peelable seal portion.

The ethylene-α,β-unsaturated carboxylic acid copolymer included in the ionomer is a polymer obtained by copolymerizing at least ethylene and a monomer selected from the α,β-unsaturated carboxylic acid as polymerization components. Monomers other than the α,β-unsaturated carboxylic acid ester may be optionally copolymerized in a range that does not undermine the object of the invention. It is preferable that the ethylene-α,β-unsaturated carboxylic acid copolymer included in the ionomer is a copolymer of only the ethylene and the α,β-unsaturated carboxylic acid, in respect that this copolymer more improves the seal strength of the peelable seal portion sealed at a low temperature compared to the related art and stably obtains the seal strength throughout a wide temperature region.

Examples of the α,β-unsaturated carboxylic acid that can be included in the ethylene-α,β-unsaturated carboxylic acid copolymer as a polymerization component include an unsaturated carboxylic acid that has a carboxylic acid group and 4 to 8 carbon atoms, such as acrylic acid, methacrylic acid, ethacrylic acid, itaconic acid, itaconic acid anhydride, fumaric acid, crotonic acid, maleic acid, maleic acid anhydride, a maleic acid monoester (monomethyl maleate, monoethyl maleate, and the like), and a maleic acid anhydride monoester (monomethyl maleic acid anhydride, monoethyl maleic acid anhydride, and the like).
Among these, acrylic acid, methacrylic acid, maleic acid, maleic acid anhydride, the maleic acid monoester, and the maleic acid anhydride monoester are preferable, and acrylic acid and methacrylic acid are particularly preferable.

The content of a constituent unit derived from the α,β-unsaturated carboxylic acid in the ethylene-α,β-unsaturated carboxylic acid copolymer is preferably 1% to 30% by mass, more preferably 5% to 25% by mass, and particularly preferably 5% to 15% by mass, based on the total mass of the copolymer. If the content of the α,β-unsaturated carboxylic acid is 1% by mass or more, and preferably 5% by mass or more, when sealing is performed at a low temperature, for example, at 100 °C to 150 °C, an appropriate seal strength (for example, 2 N/15 mm to 10 N/15 mm) is obtained.

The MFR (190 °C, a load condition of 2160 g) of the ethylene-α,β-unsaturated carboxylic acid copolymer is preferably in a range of 0.01 g/10 min to 500 g/10 min. If the MFR is in this range, there is an advantage in respect of film formability (for example, the film is not broken during the formation, fluidity is excellent, the film is excellent in stability of continuous formation, and the amount of the film extruded is also maintained constantly).

The ternary polymer of ethylene-α,β-unsaturated carboxylic acid-α,β-unsaturated carboxylic acid ester included in the ionomer is a polymer obtained by copolymerizing at least ethylene, a monomer selected from the α,β-unsaturated carboxylic acid, and a monomer selected from the α,β-unsaturated carboxylic acid ester as polymerization components.
Other monomers may also be optionally copolymerized in a range that does not undermine the object of the invention.

The α,β-unsaturated carboxylic acid that can be included in the ternary copolymer as a polymerization component has the same definition as the α,β-unsaturated carboxylic acid in the ethylene-α,β-unsaturated carboxylic acid copolymer described above. In addition, the examples, the preferable embodiments, and the like of the α,β-unsaturated carboxylic acid are also the same.

Examples of the α,β-unsaturated carboxylic acid ester that can be included in the ternary copolymer as a polymerization component include the alkyl ester of the α,β-unsaturated carboxylic acid that is specifically described above. As an alkyl group, an alkyl group with 1 to 20 carbon atoms is preferable. Specific examples thereof include an alkyl group such as methyl, ethyl, n-propyl, isopropyl, n-butyl, isobutyl, 2-ethylhexyl, and isooctyl. Among these, a lower alkyl group with 1 to 5 carbon atoms is more preferable.
Specific examples of the α,β-unsaturated carboxylic acid ester include ester compounds such as methyl acrylate, ethyl acrylate, isopropyl acrylate, isobutyl acrylate, n-butyl acrylate, isooctyl acrylate, methyl methacrylate, isobutyl methacrylate, and dimethyl maleate. Among these, a lower alkyl ester (with 1 to 5 carbon atoms) of acrylic acid or methacrylic acid such as methyl acrylate, ethyl acrylate, isopropyl acrylate, isobutyl acrylate, n-butyl acrylate, methyl methacrylate, or isobutyl methacrylate is preferable. Furthermore, an n-butyl ester and an isobutyl ester of acrylic acid or methacrylic acid are preferable, a 4-carbon atom-alkyl ester of acrylic acid is more preferable, and an isobutyl ester is particularly preferable.

Specific examples of the ternary copolymer include a ternary copolymer of ethylene-acrylic acid-acrylic acid alkyl ester, a ternary copolymer of ethylene-methacrylic acid-methacrylic acid alkyl ester, and the like.

The content of the constituent unit derived from the α,β-unsaturated carboxylic acid in the ternary copolymer is preferably 1% to 30% by mass, more preferably 5% to 25% by mass, and particularly preferably 5% to 15% by mass, based on the total mass of the ternary polymer. If the content of the α,β-unsaturated carboxylic acid is 1% by mass or more, and preferably 5% by mass or more, an appropriate seal strength (for example, 2 N/15 mm to 10 N/15 mm) is obtained when the sealing is performed at a low temperature, for example, at 100 °C to 150 °C.

The content of the constituent unit derived from the α,β-unsaturated carboxylic acid ester in the ternary copolymer is preferably 1% to 30% by mass, more preferably 2% to 20% by mass, and particularly 5% to 11% by mass, based on the total mass of the ternary polymer. If the content of the α,β-unsaturated carboxylic acid ester is 1% by mass or more, preferably 2% by mass or more, and particularly 5% by mass or more, an appropriate seal strength (for example, 2 N/15 mm to 10 N/15 mm) is obtained when the sealing is performed at a low temperature, for example, at 100 °C to 150 °C. This content is advantageous in respect that the low temperature region in which the peelable sealing can be performed widens.

The content of the constituent unit derived from the α,β-unsaturated carboxylic acid ester is preferably 1% to 10% by mass based on the total mass of all ionomers. If the content of the constituent unit derived from the α,β-unsaturated carboxylic acid ester is 10% by mass or less, excessive flexibility and tackiness of the film is suppressed, hence bag formability becomes excellent. If the content is from 1% to 10% by mass, this content is advantageous in respect that the low temperature region in which the peelable sealing can be performed widens. The content is preferably 1% to 9% by mass, and more preferably 1% to 8% by mass, from the viewpoint that a desirable stabilized seal strength is obtained when the low temperature sealing is performed in a wide temperature region.

The MFR (190 °C, a load condition of 2160 g) of the ternary copolymer is preferably in a range of 0.01 g/10 min to 500 g/10 min. If the MFR is in this range, it is advantageous in respect of the film formability.

The ionomer in the invention includes 2 or 3 or more kinds of ternary copolymers that have different MFRs as the ternary copolymer. In this case, among combinations of any of 2 kinds of ternary copolymers, it is preferable that the ratio (high MFR/low MFR) between the MFR value (high MFR) of a ternary copolymer with a higher MFR and the MFR value (low MFR) of a ternary copolymer with a lower MFR is in a range of 2 to 5. This constituent is preferable in respect that the seal strength in the peelable seal portion further improves compared to the related art, and that the seal strength can be stably obtained throughout a wide temperature region. The ratio of high MFR/low MFR is more preferably in a range of 3 to 4.
The high MFR is preferably in a range of 20 g/10 min to 60 g/10 min, more preferably in a range of 30 g/10 min to 50 g/10 min, and even more preferably in a range of 30 g/10 min to 40 g/10 min. If the high MFR is in this range, the peelable seal strength effectively improves. In this case, the low MFR is preferably in a range of 1 g/10 min to 30 g/10 min.

The ionomer in the invention includes at least the ethylene-α,β-unsaturated carboxylic acid copolymer, the ternary polymer, and metal ions that neutralize the copolymer and polymer, and the ionomer has a structure in which carboxylic acid groups that exist in side chains of molecules among chains of the molecules are cross-linked by the metal ions. Examples of the metal ions include monovalent metal ions such as lithium, sodium, potassium, and cesium; divalent metal ions such as magnesium, calcium, strontium, barium, copper, and zinc; trivalent metal ions such as aluminum and iron. Among these, sodium and zinc are preferable in respect of an excellent sealing property of the seal portion.

The degree of neutralization of the ionomer in the invention is preferably 10% or higher. The degree of the neutralization of the ionomer is preferably 10% to 60%. If the degree of neutralization is 10% or higher, the strength of the heat seal portion can improve, and if the degree is 60% or lower, it is advantageous in respect of the fluidity during the film formation.

As the ethylene-α,β-unsaturated carboxylic acid copolymer, the ternary polymer of ethylene-α,β-unsaturated carboxylic acid-α,β-unsaturated carboxylic acid ester, or the ionomer thereof, for example, a HIMILAN (product name) series and a NUCREL (product name) series manufactured by DU PONT-MITSUI POLYCHEMICALS CO., LTD., a SURLYN (product name) series manufactured by DuPont USA, an IOTEK series manufactured by Exxon Mobile Corporation USA, and the like can be used.

The ionomer in the invention may be obtained using (1) the ternary polymer, the ethylene-α,β-unsaturated carboxylic acid copolymer (neither of them include an ionomer), and a metal compound. In addition, the ionomer in the invention may also be obtained by, for example, (2) a mixture of the ternary copolymer (that does not includes an ionomer) and an ionomer of the ethylene-α,β-unsaturated carboxylic acid copolymer, (3) a mixture of an ionomer of the ternary copolymer and an ionomer of the ethylene-α,β-unsaturated carboxylic acid copolymer, (4) a mixture of the ethylene-α,β-unsaturated carboxylic acid copolymer (that does not include an ionomer) and an ionomer of the ternary copolymer, (5) a mixture of the ethylene-α,β-unsaturated carboxylic acid copolymer, the ternary copolymer (neither of them include an ionomer), and an ionomer of the ternary copolymer, and the like.

### (B) Propylene-based polymer

The polymer composition of the invention contains at least one kind of a propylene-based polymer. By the polymer composition of the invention contains the propylene-based polymer, a low temperature range in which the peelable sealing can be performed widens.

Examples of the propylene-based polymer include a high crystallinity polymer selected from a group that consists of a propylene homopolymer and a propylene-based copolymer obtained by the copolymerization of propylene and other monomers.

Examples of the propylene-based copolymer includes a random copolymer, a block copolymer, an alternating copolymer, and the like of propylene and ethylene and/or α-olefin (that preferably has 4 to 8 carbon atoms). The random copolymer is preferable in respect of excellent film formability and flexibility.

The MFR (230 °C, a load condition of 2160 g) of the propylene-based polymer is preferably 0.5 g/10 min to 100 g/10 min, and more preferably 1 g/10 min to 50 g/10 min, in respect of the film formability.

It is preferable that the polymer composition of the invention is a combination in which the (A) ionomer is a Zn ionomer that includes an ethylene-(meth)acrylic acid copolymer and a ternary polymer of ethylene-(meth)acrylic acid-(meth)acrylic acid ester, and the (B) propylene-based polymer is a propylene-ethylene copolymer, in respect that the effect of the invention is obtained better.
In the present specification, the "(meth)acrylic acid" refers to acrylic acid or methacrylic acid.

In the polymer composition of the invention, it is preferable that the content of the (A) ionomer is in a range of 85 to 95 parts by mass, and that the content of the (B) propylene-based polymer is in a range of 5 to 15 parts by mass, based on 100 parts by mass that is the total amount of the (A) ionomer and the (B) propylene-based polymer, from the viewpoint of improvement of the seal strength of the peelable seal portion and the expansion of the temperature region in which the strength is obtained. If the content of the (A) ionomer and the (B) propylene-based polymer is in this range, it is possible to obtain a stabilized peelable seal strength in the low temperature region while maintaining a high seal strength at a high temperature.
When the content of the (A) ionomer is less than 85 parts by mass (when the content of the (B) propylene-based polymer exceeds 15 parts by mass), the seal strength (in particular, seal strength at a high temperature) decreases, and the easy opening property and the seal strength are not in a balance in the peelable seal portion in some cases. On the other hand, when the content of the (A) ionomer exceeds 95 parts by mass (when the content of the (B) propylene-based polymer is less than 5 parts by mass), the content of the (B) propylene-based polymer relatively decreases too much, and the temperature region in which the easy opening property is not impaired in the peelable seal portion, and the peelable sealing can be performed is narrowed in some cases.

The polymer composition of the invention may optionally contain additives such as an antioxidant, a weather resistant stabilizer, a lubricant, and an anti-fog agent, in addition to the (A) ionomer and the (B) propylene-based polymer, within a range that does not undermine the object of the invention. The polymer composition of the invention may also contain a polyolefin resin for the purpose of adjusting a balance between the peelable sealing property and lock sealing property. Examples of the polyolefin resin include an ethylene-based polymer and copolymer such as high density polyethylene and low density polyethylene; polybutene; other olefin-based (co)polymers; a polymer blend thereof, and the like.

The preparation of the polymer composition of the invention is performed by dryblending or melt-blending at least the (A) ionomer and the (B) propylene-based polymer at the same time or sequentially. When the dry blend is performed, in a forming machine, both the (A) ionomer and the (B) propylene-based polymer are melted and plasticized and uniformly melted and mixed. When the melt blend is performed, the (A) ionomer and the (B) propylene-based polymer are melted and mixed using various mixers such as a single screw extruder, a twin-screw extruder, and a Banbury mixer; rolls; various kneaders; and the like. The melt bled is preferable in respect of miscibility. There is no special limitation on the mixing order.

When a film is formed by the T-die casting method using the polymer composition of the invention, the film may be processed into a single layer or may be processed into a shape (multilayer) in which plural layers are layered. When the film is processed into multilayer form, it is possible to layer a layer that made of the polymer composition of the invention and a layer that consists of other material.

As the T-die casting method, well-known methods can be used. As a method for producing a film by the T-die casting method using the polymer composition of the invention, the following method is preferable. The polymer composition of the invention is melted in an extruder at a temperature from 200 °C to a temperature (preferably, 200 °C to 250 °C) at which the polymer composition is not scorched or burnt, extruded in a film shape onto a cooling roll from the T-die at the leading end of the extruder, and solidified without being stretched. The solidified film is not stretched, and the thickness thereof is preferably 300 µm or less. The "thickness" herein refers to a thickness of a layer if the film is processed into a single layer during the formation, and refers to a total thickness of all layers if the film is processed into a multilayer form.

The film thickness can be appropriately changed according to usage purposes of the film. The polymer composition of the invention is preferable for producing a film with a thickness of several µm to 300 µm, for example.

A preferable embodiment of the heat seal material that consists of the polymer composition of the invention is the one which is obtained by forming a film with a thickness of 30 µm to 70 µm using the polymer composition of the invention, and layering the film with various substrates. In addition, a preferable embodiment of the packing material that stores heavy goods such as liquid is the one which is obtained by forming a film with a thickness of 50 µm to 200 µm using the polymer composition of the invention, and layering the film with various substrates.

The polymer composition of the invention can be used by being applied as a seal material to various substrates such as polyester such as polyethylene terephthalate and the like, polyamide, polyvinylidene chloride, an ethylene-vinyl acetate copolymer-saponified substance, polystyrene, polybutene, polypropylene, polyethylene, paper, an aluminum foil, and metal-deposited film. The seal material may be applied onto the substrate through an adhesive agent, or may be directly applied onto the substrate surface. As the adhesive agent, it is possible to select well-known anchor coating agents such as an ethylene-based resin that includes polyethylene produced under a high pressure, and an adhesive composition obtained by mixing a crosslinking agent with a single body or a mixture of any of a polyester urethane polyol that has undergone chain extension by means of a polyester polyol and a bi- or higher functional isocyanate compound.

Examples of methods of providing the polymer composition of the invention onto the substrate are as follows. The following methods may be applied in combination.

### (1) Heat sealing method

This is a method of forming the polymer composition of the invention into a film shape in advance, loading the formed substance on a substrate through an adhesive agent, and performing thermal pressure bonding. Alternatively, this is a method of layering the adhesive agent in advance by means of coextrusion, extrusion and covering, and the like, on the surface of at least one of the substrate and the formed substance, and then performing thermal pressure bonding the substrate and the formed substance.

### (2) Sandwich lamination method

This is a method of forming the polymer composition of the invention into a film shape in advance, and sticking the formed substance and a substrate through a molten layer of an adhesive agent formed by T-die casting method and the like.

### (3) Coextrusion method

This is a method of layering a substrate resin and the polymer composition of the invention, or layering the substrate resin, an adhesive agent and the polymer composition of the invention by coextrusion formation. The polymer composition of the invention is suitable for forming a film by the T-die casting method. Consequently, when the substrate material to be layered is a thermoplastic resin, it is possible to produce the film with excellent productivity according to this method.

### (4) Pressure bonding and adhesion method that use an adhesive agent

This is a method of forming the polymer composition of the invention into a film shape in advance, applying an adhesive agent to one or both of the formed substance and a substrate, and performing pressure bonding the resultant to be stuck.

In order to improve adhesive strength, the surface of the substrate to which the polymer composition of the invention is applied may be treated in advance with a well-known method such as corona discharge treatment and the like.

The layered body obtained in this manner in which the heat seal material that made of the polymer composition of the invention is layered on the substrate can be used as a packing material. For example, the layered body can be used as a package for liquid substances such as pickle and konjac; a package for liquid foods such as liquid soup, a package for liquid seasoning, dressing, and olive oil; a package for liquid other than foods such as a liquid shampoo and a neutral detergent; a package for powder such as powder soup, flour, table salt, and spices; dehydrated food such as snacks; and as a package for a medical use such as an injector syringe and an infusion bag.

### EXAMPLES

Hereinafter, the invention will be described in more detail based on examples. However, the invention is not limited to the following examples.

### (Example 1)

### -Preparation of Polymer Composition-

The following components were used and melted and kneaded by a single screw extruder (40 mmφ, provided with a Dulmage screw at the tip thereof) under a condition of a resin temperature of 180 °C and the frequency of rotation of the screw of 50 rpm to prepare a polymer composition. The details of the mixing and the obtained polymer composition are shown in the following Tables 1 and 2. The MAA amount, IBA amount, and the degree of neutralization in the following Table 2 are proportions with respect to the ionomer (a fraction that remains after the propylene-based polymer and additives are excluded from the polymer composition) in the polymer composition.

### <Component>

### ·Ionomer 1

A zinc ionomer of an ethylene-methacrylic acid-isobutyl acrylate ternary copolymer [Content of methacrylic acid of 10% by mass, content of isobutyl methacrylate of 10% by mass, degree of neutralization of 70%, MFR (190 °C, load of 2160 g) of 1.0 g/10 min, MFR (230 °C, load of 2160 g) of 4.6 g/10 min, manufactured by DU PONT-MITSUI POLYCHEMICALS CO., LTD.]

### ·EMAA 1

### Ethylene-methacrylic acid copolymer

[Content of methacrylic acid of 9% by mass, MFR (190 °C, load of 2160 g) of 8.0 g/10 min, MFR (230 °C, load of 2160 g) of 26.6 g/10 min, manufactured by DU PONT-MITSUI POLYCHEMICALS CO., LTD.]

### ·PP

### Propylene-ethylene random copolymer

[MFR (190 °C, load of 2160 g) of 3.3 g/10 min, MFR (230 °C, load of 2160 g) of 8.0 g/10 min, density of 910 kg/m³, product name of Prime Polypro F219D, manufactured by Prime Polymer Co., Ltd.]

### -Preparation of Cast Film-

By using the following 3 kinds of compositions, a non-stretched cast film with a total thickness of 50 µm formed into a layered structure of a seal layer (thickness of 20 µm)/intermediate layer (thickness of 15 µm)/substrate-adhered layer (thickness of 15 µm) was produced, by means of a cast forming machine (3-type 3-layer forming machine, cooling: air knife, process speed of 20 m/min) in which the resin temperature in the extruder and the T-die was set to 230 °C. There was no problem with formability. Hereinafter, this non-stretched cast film will be abbreviated as a cast film (50).

### <Composition for seal layer>

The polymer composition obtained by the preparation of polymer composition was introduced to the forming machine, followed by melting and kneading.

### <Composition for Intermediate Layer>

An ionomer 2 described below and linear low density polyethylene (referred to as LLDPE 1 as below) produced by a metallocene catalyst were introduced to the forming machine in a ratio of 50:50 in terms of a mass ratio, followed by melting and kneading.

### ·Ionomer 2

### A zinc ionomer of an ethylene-methacrylic acid copolymer

[Content of methacrylic acid of 12% by mass, degree of neutralization of 35%, MFR (190 °C, load of 2160 g) of 1.5 g/10 min, MFR (230 °C, load of 2160 g) of 6.5 g/10 min, manufactured by DU PONT-MITSUI POLYCHEMICALS CO., LTD.]

### ·LLDPE 1

### Ethylene-hexene-1 copolymer

[MFR (190 °C, load of 2160 g) of 4.3 g/10 min, density of 937 kg/m³, product name of EVOLUE-SP 4030S, manufactured by Prime Polymer Co., Ltd.]

### <Composition for Substrate-Adhered Layer>

The LLDPE 1 and EAZ-10 (a composition obtained by mixing 10% by mass of synthetic silica as an anti-blocking agent and 90% by mass of low density polyethylene, manufactured by Prime Polymer Co., Ltd.) were introduced to the forming machine in a ratio of 100:5 in terms of a mass ratio, followed by melting and kneading.

### -Evaluation-

A layered substrate of polyethylene terephthalate [PET (12)] with a thickness of 12 µm/polyethylene [PE (15)] with a thickness of 15 µm was prepared, and the cast film (50) was loaded on the PE (15) side through different PE (15) so that the seal layer of the cast film became the surface (so that the substrate-adhered layer became the layered substrate side). Subsequently, the resultant was processed by sand lamination using 65 mmφ of a laminator (temperature of 315 °C) to provide a sample formed to layered structure of PET (12)/PE (30)/cast film (50). PE (30) represents film-like polyethylene with a thickness of 30 µm.

By using the obtained sample, the surfaces of the seal layer side were superimposed on each other, and one surface thereof was heated by a heat sealer (actual pressure of 0.2 MPa, sealing time of 0.5 sec, bar seal type) to perform heat sealing. Thereafter, the heat seal portion was peeled (peeling speed of 300 mm/min, peeling angle of T type, test specimen width of 15 mm) using a tensile tester, and the peeling strength in the peeling was measured as a seal strength (N/15 mm). The measured results are shown in the following Table 3.

### (Examples 2 to 6 and 8)

A non-stretched cast film with a total thickness of 50 µm was formed in the same manner as in Example 1, except that the respective components used for "Preparation of Polymer Composition" in Example 1 were changed as shown in the following Table 1. The cast film was processed by sand lamination, thereby obtaining a sample. Thereafter, by using the obtained sample, heat sealing was performed in the same manner as in Example 1, and the seal strength was measured. There was no problem with the film formability in all of Examples 2 to 6 and 8. The details of the obtained polymer composition are shown in the following Table 2, and the measured results are shown in the following Table 3.

### (Example 7)

A non-stretched cast film with a total thickness of 50 µm was formed in the same manner as in Example 1, except that the respective components used for "Preparation of Polymer Composition" in Example 1 were changed as shown in the following Table 1. The cast film was processed by sand lamination, thereby obtaining a sample. Thereafter, by using the obtained sample, heat sealing was performed in the same manner as in Example 1, and the seal strength was measured. There was no problem with the film formability in Example 7. The details of the obtained polymer composition are shown in the following Table 2, and the measured results are shown in the following Table 3.

The ionomer 2 in the following Table 1 was used for the composition of the intermediate layer during the production of the cast film in Example 1. The composition of an EMAA 2 is as follows.

### ·EMAA 2

### Ethylene-methacrylic acid-isobutyl acrylate ternary polymer

[Content of methacrylic acid of 11%, content of isobutyl acrylate of 8%, MFR (190 °C, load of 2160 g) of 10.0 g/10 min, MFR (230 °C, load of 2160 g) of 32.7 g/10 min, manufactured by DU PONT-MITSUI POLYCHEMICALS CO., LTD.]

### (Comparative Examples 1 and 4)

A non-stretched cast film with a total thickness of 50 µm was formed in the same manner as in Example 1, except that the respective components used for "Preparation of Polymer Composition" in Example 1 were changed as shown in the following Table 1. The cast film was processed by sand lamination, thereby obtaining a sample. Thereafter, by using the obtained sample, heat sealing was performed in the same manner as in Example 1, and the seal strength was measured. There was no problem with the film formability in Comparative Examples 1 and 4. The details of the obtained polymer composition are shown in the following Table 2, and the measured results are shown in the following Table 3.

### (Comparative Example 2)

A polymer composition was prepared in the same manner as in Example 1, except that the respective components used for "Preparation of Polymer Composition" in Example 1 were changed as shown in the following Table 1. The details of the obtained polymer composition are shown in the following Table 2.

### -Preparation of Cast Film-

By using the obtained polymer composition, a non-stretched monolayer cast film with a thickness of 30 µm was formed by a cast forming machine (40 mm monolayer forming machine, cooling: air knife, process speed of 30 m/min) in which the resin temperature in the extruder and the T-die was set to 230 °C. There was no problem with the film formability in Comparative Example 2.

Subsequently, the film was processed by the sand lamination in the same manner as in Example 1, followed by heat sealing, and the seal strength was measured. The measured results are shown in the following Table 3.

### (Comparative Example 3)

A polymer composition was prepared in the same manner as in Example 1, except that the respective components used for "Preparation of Polymer Composition" in Example 1 were changed as shown in the following Table 1. The details of the obtained polymer composition are shown in the following Table 2.

### -Preparation of Inflation Film-

By using the obtained polymer composition, an inflation film with a total thickness of 50 µm (thickness ratio of 1:1:1) was formed by 50 mmφ of an inflation forming machine (3-type 3-layer forming machine) in which the resin temperature in the extruder and the die was set to 170 °C. There was no problem with the film formability in Comparative Example 3. The configuration of the 3 layers of the film is as follows.

### <Seal Layer>

The polymer composition obtained in the preparation of polymer composition was introduced to the forming machine, followed by melting and kneading.

### <Intermediate Layer>

The ionomer 2 and the linear low density polyethylene (referred to as LLDPE 2 as follows) produced by a metallocene catalyst were introduced to the forming machine in a ratio of 50:50 in terms of a mass ratio, followed by melting and kneading.

### ·LLDPE 2

### Ethylene-hexene-1 copolymer

[MFR (190 °C, load of 2160 g) of 1.8 g/10 min, density of 937 kg/m³, product name of EVOLUE-SP 4020, manufactured by Prime Polymer Co., Ltd.]

### <Substrate-adhered layer>

The LLDPE 2 and an anti-blocking agent-mixed master batch (a composition obtained by mixing diatomaceous earth with low density polyethylene in a ratio of 50:50 in terms of a mass ratio) were introduced to the forming machine in a ratio of 100:1 1 in terms of a mass ratio, followed by melting and kneading.

Thereafter, in the same manner as in Example 1, the resultant was processed by sand lamination, followed by heat sealing, and the seal strength was measured. The measured results are shown in the following Table 3.

**[Table 1]**

| | MFR [g/10 min] | | MAA | IBA | Degree of neutralization | Composition of example [part] | | | | | | | | Composition of comparative example [part] | | | |
|---|---|---|---|---|---|---|---|---|---|---|---|---|---|---|---|---|---|
| | 190 °C | 230 °C | | | | 1 | 2 | 3 | 4 | 5 | 6 | 7 | 8 | 1 | 2 | 3 | 4 |
| Ionomer 1 | 1.0 | 4.6 | 10% | 10% | 70% Zn | 51 | 61 | 53 | 47 | 40 | 27 | - | 70 | 55 | 46 | 46 | 4 |
| Ionomer 2 | 1.5 | 6.5 | 12% | - | Zn | - | - | 35% | - | - | - | 67 | - | - | - | - | - |
| EMAA 1 | 8.0 | 26.6 | 9% | - | - | 41 | 31 | 39 | 45 | 52 | 65 | - | 22 | - | - | - | 88 |
| EMAA 2 | 10.0 | 32.7 | 11% | 8% | - | - | - | - | - | - | - | 25 | - | 37 | 46 | 46 | - |
| PP | 3.3 | 8.0 | - | - | - | 8 | 8 | 8 | 8 | 8 | 8 | 8 | 8 | 8 | 8 | 8 | 8 |

| | | | | | | | | | | | | | | | | | |
|---|---|---|---|---|---|---|---|---|---|---|---|---|---|---|---|---|---|
| MAA=methacrylic acid IBA=isobutyl acrylate | | | | | | | | | | | | | | | | | |

**[Table 2]**

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| MFR of ionomer [g/10 min] | 190 °C | 2.5 | 2.0 | 2.4 | 2.8 | 3.3 | 4.3 | 2.5 | 1.6 | 2.5 | 3.2 | 3.2 | 7.3 |
| | 230 °C | 10.1 | 8.4 | 9.6 | 10.9 | 12.5 | 15.9 | 10.1 | 7.0 | 10.1 | 12.3 | 12.3 | 24.7 |
| MFR of ionomer/MFR of propylene-based polymer [%] | 190 °C | 76 | 61 | 73 | 85 | 100 | 130 | 76 | 49 | 76 | 97 | 97 | 221 |
| | 230 °C | 126 | 105 | 120 | 136 | 156 | 199 | 126 | 88 | 126 | 154 | 154 | 309 |
| MFR of polymer composition [g/10 min] | 190 °C | 2.6 | 2.1 | 2.5 | 2.8 | 3.2 | 4.3 | 2.6 | 1.7 | 2.6 | 3.2 | 3.2 | 6.9 |
| | 230 °C | 9.9 | 8.3 | 9.5 | 10.6 | 12.0 | 15.0 | 9.9 | 7.1 | 9.9 | 11.9 | 11.9 | 22.5 |
| MAA amount in ionomer [%] | | 9.6 | 9.7 | 9.6 | 9.5 | 9.4 | 9.3 | 11.7 | 9.8 | 10.4 | 10.5 | 10.5 | 9.0 |
| IBA amount in ionomer [%] | | 5.5 | 6.6 | 5.8 | 5.1 | 4.3 | 2.9 | 2.2 | 7.6 | 9.2 | 9.0 | 9.0 | 0.4 |
| Degree of neutralization of acid group in ionomer [%Zn] | | 38.5 | 46.2 | 40.6 | 35.7 | 30.1 | 20.5 | 26.3 | 53.2 | 42 | 35 | 35 | 3.0 |

**[Table 3]**

| Heat seal strength (N/15 mm) | | | | | | | | | | | | | |
|---|---|---|---|---|---|---|---|---|---|---|---|---|---|
| | | Example | | | | | | | | Comparative Example | | | |
| | | 1 | 2 | 3 | 4 | 5 | 6 | 7 | 8 | 1 | 2 | 3 | 4 |
| Forming method | | T-die casting | T-die casting | T-die casting | T-die casting | T-die casting | T-die casting | T-die casting | T-die casting | T-die casting | T-die casting | Inflation | T-die casting |
| Process temperature | | 230 °C | 230 °C | 230 °C | 230 °C | 230 °C | 230 °C | 230 °C | 230 °C | 230 °C | 230 °C | 170 °C | 230 °C |
| Film thickness | | 50 µm | 50 µm | 50 µm | 50 µm | 50 µm | 50 µm | 50 µm | 50 µm | 50 µm | 30 µm | 50 µm | 50 µm |
| Peeling direction :MD [°C] | 110 | 1.8 | - | - | - | - | - | - | - | 2.7 | 0.7 | 1.7 | - |
| | 120 | 3.7 | 1.8 | 3.0 | 3.6 | 3.6 | 5.7 | 2.1 | 2.0 | 4.4 | 1.8 | 2.5 | 6.1 |
| | 130 | 5.0 | 2.8 | 3.9 | 4.8 | 5.1 | 8.1 | 3.2 | 2.9 | 6.2 | 4.5 | 3.5 | 7.8 |
| | 140 | 6.3 | 4.0 | 5.1 | 6.1 | 6.5 | 8.9 | 4.4 | 4.2 | 8.5 | 10.3 | 4.5 | 12.4 |
| | 150 | 7.7 | 6.0 | 6.1 | 7.7 | 8.2 | 9.9 | 6.6 | 5.9 | 14.4 | 20.6 | 5.0 | 20.0 |
| | 160 | 10.8 | 8.4 | 10.5 | 11.4 | 9.8 | 12.6 | 10.1 | 19.7 | 22.9 | 30.9* | 6.1 | 25.5 |
| | 170 | 16.7 | 15.4 | 18.6 | 18.2 | 23.9 | 26.6 | 20.9 | 34.8* | 29.2* | 35.5* | 9.5 | 29.8* |
| | 180 | 33.6* | 31.0* | 32.5* | 32.6* | 34.6* | 35.2* | 37.4* | 39.3* | 34.7* | 36.1* | 28.8* | 34.1* |
| | 190 | 34.5* | 34.9* | 35.6* | 36.6* | 37.1* | 37.2* | 39.8* | 38.7* | 36.2* | 37.9* | 33.9* | 35.8* |
| | 200 | 36.9* | 37.6* | 38.1* | 39.1* | 39.0* | 38.5* | 41.3* | 40.5* | 36.1* | 37.2* | 34.9* | 37.4* |

| | | | | | | | | | | | | | |
|---|---|---|---|---|---|---|---|---|---|---|---|---|---|
| Peeling state observation: no mark=boundary peeling, *=cohesive failure | | | | | | | | | | | | | |

As shown in Table 3, in Examples 1 to 8 that used the polymer composition of the invention, the seal strength in a low temperature region (about 110 °C to 150 °C) was about equal to or higher than that of Comparative Example 3 that was formed by inflation used in the related art. In addition, the temperature-dependant change in the seal strength was suppressed in the low temperature region described above. These results clearly showed that the film formed by the T-die casting method by using the polymer composition of the invention may perform stabilized peelable sealing. Moreover, In Examples 1 to 8, the seal strength of a high temperature region was not impaired, and a difference between the seal strength of a low temperature region and the seal strength of a high temperature region was sufficient for accomplishing dual-sealing performance.
In Comparative Example 1 that used a composition which was not the polymer composition of the invention, the temperature-dependant change in the seal strength in the low temperature region was great. Similarly, in Comparative Examples 2 and 4, the temperature-dependant change in the seal strength in the low temperature region was extremely great, and the temperature region in which the peelable sealing can be performed was narrow.

The entire disclosure of Japanese Patent Application No. 2009-162844 filed on July 9, 2009 is incorporated in the present specification by reference.
The entire disclosure of Japanese Patent Application No. 2009-182626 filed on August 5, 2009 is incorporated in the present specification by reference.
All documents, patent applications and technical specifications recited in this specification are incorporated herein by reference in this specification to the same extent as if each individual publication, patent applications and technical standard was specifically and individually indicated to be incorporated by reference.

## Claims

1. A polymer composition comprising:
an ionomer which includes an ethylene-α,β-unsaturated carboxylic acid copolymer and a ternary polymer of an ethylene-α,β-unsaturated carboxylic acid-α,β-unsaturated carboxylic acid ester, and
a propylene-based polymer,
wherein a melt flow rate (MFR) value (under a load of 2160 g) of the ionomer at a process temperature in forming a film by a T-die melting casting method is from 50% to 250% based on an MFR value of the propylene-based polymer under the same condition.

2. The polymer composition according to claim 1,
wherein a content of a constituent unit derived from the α,β-unsaturated carboxylic acid ester in the ternary polymer is from 1% to 10% by mass based on a total mass of the ionomer.

3. The polymer composition according to claim 1,
wherein a content of the ionomer is from 85 to 95 parts by mass, and a content of the propylene-based polymer is from 5 to 15 parts by mass, based on 100 parts by mass of a total amount of the ionomer and the propylene-based polymer.

4. The polymer composition according to claim 1,
wherein a degree of neutralization of an acid group in the ionomer is from 10% to 60%.

5. The polymer composition according to claim 1,
wherein the α,β-unsaturated carboxylic acid ester included in the ternary polymer as a polymerization component is selected from a lower alkyl ester of α,β-unsaturated carboxylic acid, wherein a number of carbon atoms in the alkyl is from 1 to 5.

6. The polymer composition according to claim 1,
wherein the α,β-unsaturated carboxylic acid included in the copolymer and the ternary polymer as a polymerization component is selected from acrylic acid and methacrylic acid, and
the α,β-unsaturated carboxylic acid ester included in the ternary polymer as a polymerization component is selected from a lower alkyl ester of acrylic acid, wherein a number of carbon atoms in the alkyl is from 1 to 5, or a lower alkyl ester of methacrylic acid, wherein a number of carbon atoms in the alkyl is from 1 to 5.

7. The polymer composition according to claim 6,
wherein the α,β-unsaturated carboxylic acid ester is a 4 carbon atom-alkyl ester of acrylic acid.

8. The polymer composition according to claim 6,
wherein the α,β-unsaturated carboxylic acid ester is an isobutyl acrylate.

9. The polymer composition according to claim 1,
wherein the ionomer is a Zn ionomer that includes an ethylene-(meth)acrylic acid copolymer and a ternary polymer of ethylene-(meth)acrylic acid- (meth)acrylic acid ester, and
the propylene-based polymer is a propylene-ethylene copolymer.

10. The polymer composition according to claim 1,
wherein a content of a constituent unit derived from the α,β-unsaturated carboxylic acid in the copolymer is from 1% to 30% by mass based on a total mass of the copolymer.

11. The polymer composition according to claim 1,
wherein a content of a constituent unit derived from the α,β-unsaturated carboxylic acid in the ternary polymer is from 1% to 30% by mass based on a total mass of the ternary polymer.

12. The polymer composition according claim 1,
wherein a content of a constituent unit derived from the α,β-unsaturated carboxylic acid ester in the ternary copolymer is from 1% to 30% by mass based on a total mass of the ternary polymer.

13. The polymer composition according to claim 1,
wherein the process temperature is from 200 °C to 250 °C.

14. A method for producing a non-stretched film with a thickness of 300 µm or less by a T-die melting casting method using the polymer composition according to claim 1.

15. The method for producing a non-stretched film according to claim 14,
wherein the process temperature in forming a film by the T-die melting casting method is from 200 °C to 250 °C.

16. A non-stretched film with a thickness of 300 µm or less produced by the method of claim 14.

17. A heat seal material that comprises the polymer composition according to claim 1.

18. A packing material provided by layering the heat seal material according to claim 17 on a substrate.
